# EUROPEAN PATENT APPLICATION

(11) **EP 4 736 810 A1**
(43) Date of publication of application: **06.05.2026**
(21) Application number: 25210576.2
(22) Date of filing: 22.10.2025
(51) Int. Cl.: A61C 17/22, A46B 5/00

(54) **ATTACHMENT PORTION OF A REPLACEMENT BRUSH HEAD**

(30) Priority: 30.10.2024 US 202463713758 P
(71) Applicant: Ranir, LLC, Grand Rapids MI 49512 (US)
(72) Inventor: DISHON, Bryan J., Alto, 49302 (US)
(74) Representative: Haseltine Lake Kempner LLP

(57) **Abstract**

A replacement brush head is provided for a robust snap-fit attachment to an electric toothbrush handle. The replacement brush head includes a tubular body with a bristle carrier disposed on a first end. The second end includes structure for attaching the tubular body to an attachment portion of the handle. This attachment structure may include a pair of spaced apart, resilient retention bars extending parallel to the longitudinal axis, with each of the resilient retention bars including first and second ends connected to the tubular body, and each of the resilient retention bars including a clamp portion positioned between the first and second ends and capable of flexing with respect to the first and second ends.

## Description

### BACKGROUND OF THE INVENTION

The present invention relates to electric toothbrushes, and more particularly to a replacement brush head that is attachable to an electric toothbrush drive unit, and a structure for connecting an outer sleeve portion of the replacement brush head to a static portion of the electric toothbrush drive unit.

Recognizing that toothbrush bristles require periodic replacement, manufacturers have designed replacement brush heads to fit onto separate drive units of electric toothbrushes. The drive units typically include a power source, switch and a drive shaft. The replacement brush heads typically can be removably attached to the drive units by threading or snap-fitting a portion of the replacement head onto a portion of the drive unit.

Replacement brush heads typically include an elongated neck with an internal brush shaft connected to a bristle bearing head or bristle carrier. The brush shaft is arranged to transfer power from the drive shaft to the brush head for moving the brush head in a desired manner. One particular style of brush head is configured to convert alternating linear movement of the drive shaft along a longitudinal axis into rotational or angularly oscillatory movement of the bristle head about an axis that is perpendicular to the longitudinal axis of the drive shaft. These brush heads commonly include a fixed outer sleeve having the bristle bearing head at one end and an attachment portion at the opposite end. The brush head includes internal components within the outer sleeve for mating with the drive shaft, converting the motion, and driving the bristle carrier.

The outer sleeve typically includes structure at the attachment end for connecting to a fixed portion of the drive unit in a manner that reliably retains the brush head in place on the drive unit during use while also enabling relatively easy removal and replacement by the user. One example of such an attachment is shown in US Patent 10869743 to Fritsch. In this example, the drive unit includes a generally cylindrical coupling stem having a sidewall and a free end. The linearly alternating drive shaft extends from the free end. A coupling pin extends outwardly from the sidewall to form a structure for interfitting with the outer sleeve of the brush head. The outer sleeve of the brush head includes a coupling insert that is configured to snap fit with the coupling pin via a pair of curved, laterally extending opposing cantilevered arms. These arms are capable of flexing in order to provide a reliable snap fit connection with the drive unit, but may be breakable and difficult to manufacture due to their curved, elongated nature.

### SUMMARY OF THE INVENTION

The present invention provides a replacement brush head for a robust snap-fit attachment to an electric toothbrush handle of the style that includes an attachment portion with a sidewall, and a pin extending outwardly form the sidewall.

In one embodiment, the replacement brush head includes a tubular body with a first end and a second end opposite the first end, and the tubular body defines a longitudinal axis. A bristle carrier is disposed on the first end, the bristle carrier having a bristle surface supporting a plurality of bristles, the bristle carrier configured to rotate with respect to the outer sleeve about a cleaning axis extending at an angle to the longitudinal axis.

The second end of the tubular body may include structure for attaching the tubular body to the attachment portion of the handle. This attachment structure may include a pair of spaced apart, resilient retention bars, with each of the resilient retention bars including first and second ends connected to the tubular body, and each of the resilient retention bars including a clamp portion positioned between the first and second ends and capable of flexing with respect to the first and second ends. The retention bars are spaced apart from one another such that they engage and receive the coupling pin upon insertion of the attachment portion of the handle into the second end of the tubular body with the pin radially aligned between the retention bars.

In one embodiment, the tubular body includes an outer sleeve and a coupling insert that is disposed in the second end of the outer sleeve, wherein the coupling insert includes the attachment structure. The coupling insert may include an upper end positioned within the outer sleeve, and a lower end positioned adjacent to the second end of the outer sleeve, the coupling insert including an upper section adjacent the upper end, and a lower section adjacent the lower end. The retention bars may include an upper portion, the clamp portion, and a guide portion, the upper portion extending from the first end of the retention bar to the clamp portion, the guide portion extending from the second end of the retention bar to the clamp portion. In one embodiment, the clamp portions of the retention bars are shaped to match the shape of the coupling pin, and the clamp portions may have concave sections facing one another to form fir around a generally cylindrical coupling pin. The guide portions of the retention bars may converge toward one another from the second ends of the retention bars to the clamp portion, such that the guide portions of the retention bars can act to guide the coupling pin into the clamp portion as the replacement head is attached to the electric toothbrush handle. The upper portions of the retention bars may be generally parallel to one another. The coupling insert may include first and second flex channels extending along the exterior surfaces of the retention bars to enable flexing of the retention bars.

In one embodiment, the coupling insert includes structure for snap fitting the coupling insert into the outer sleeve. This structure may include one or more protrusions extending from the coupling insert and positioned such that they align with corresponding openings in the outer sleeve to extend into and interfit with the openings in the outer sleeve when the coupling insert is inserted into the outer sleeve. In one embodiment, these protrusions include a pair of protrusions, with one of the protrusions on a front surface of the coupling insert and the other protrusion on the rear surface of the coupling insert.

### BRIEF DESCRIPTION OF THE DRAWINGS

Fig. 1 is an exploded perspective view of the handle and toothbrush head according to one embodiment of the present invention.
Fig. 2 is a perspective view of an electric toothbrush handle according to one embodiment.

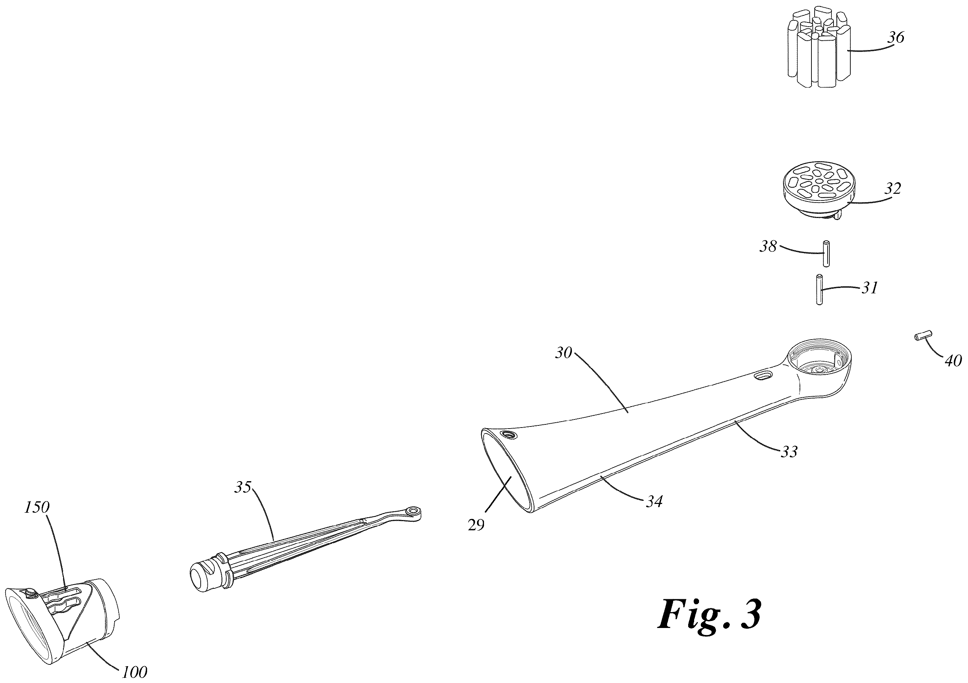

Fig. 3 is an exploded view of the toothbrush head according to one embodiment.

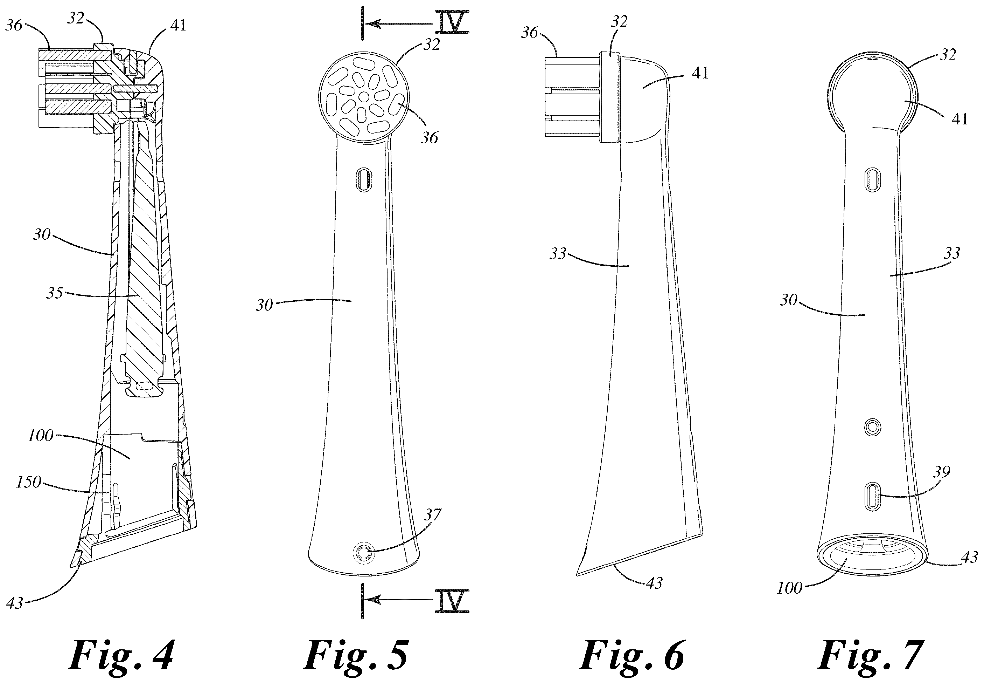

Fig. 4 is a side cross sectional view of the toothbrush head according to one embodiment taken along line B-B in Fig. 5.
Fig. 5 is a front view of the toothbrush head according to one embodiment.
Fig. 6 is a right side view thereof.
Fig. 7 is a rear view thereof.
Fig. 8 is a front perspective view of a coupling insert according to one embodiment.
Fig. 9 is a rear perspective view thereof.
Fig. 10 is a top perspective view thereof.
Fig. 11 is a bottom perspective view thereof.
Fig. 12 is a side cross sectional view thereof taken along line A-A in Fig. 13.
Fig. 13 is a front view thereof.
Fig. 14 is a bottom perspective view thereof.

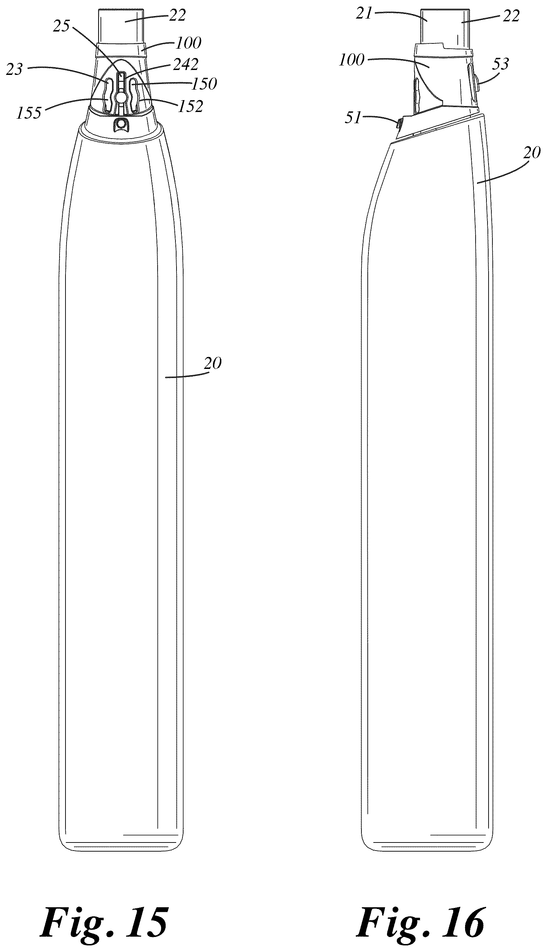

Fig. 15 is a front view of a toothbrush handle with coupling insert attached to the attachment stem according to one embodiment.
Fig. 16 is a side view thereof.

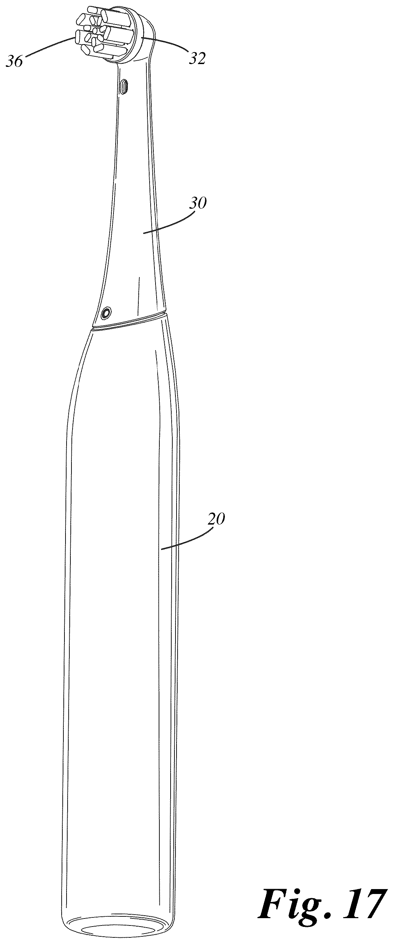

Fig. 17 is a perspective view of an electric toothbrush with the toothbrush head attached according to one embodiment.

Before the embodiments of the invention are explained in detail, it is to be understood that the invention is not limited to the details of operation or to the details of construction and the arrangement of the components set forth in the following description or illustrated in the drawings. The invention may be implemented in various other embodiments and of being practiced or being carried out in alternative ways not expressly disclosed herein. Also, it is to be understood that the phraseology and terminology used herein are for the purpose of description and should not be regarded as limiting. The use of "including" and "comprising" and variations thereof is meant to encompass the items listed thereafter and equivalents thereof as well as additional items and equivalents thereof. Further, enumeration may be used in the description of various embodiments. Unless otherwise expressly stated, the use of enumeration should not be construed as limiting the invention to any specific order or number of components. Nor should the use of enumeration be construed as excluding from the scope of the invention any additional steps or components that might be combined with or into the enumerated steps or components.

### DESCRIPTION OF THE CURRENT EMBODIMENTS

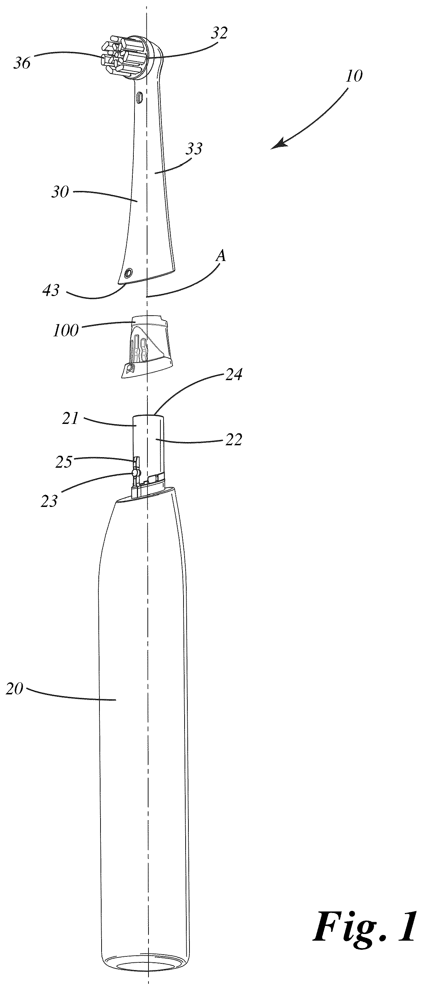

The embodiments of the invention described herein relate to an electric toothbrush 10 that includes a handle 20 and a brush head 30 having a longitudinal axis A. In the embodiment of FIG. 1, the longitudinal axis of the brush head 30 coincides with that of the handle 20, but one skilled in the art will appreciate that in some embodiments (not shown here) the brush head can be designed to be slightly angled relative to the handle, in which instances the longitudinal axis of the brush head may not coincide with or be parallel to the that of the handle. Such an angled embodiment is included in the scope of the invention.

The brush head 30 is structured and configured to be attached to the handle 20 via a coupling insert 100. The handle 20 has a drive mechanism (not shown) inside, and the brush head 30 has a bristle carrier 32 and brush shaft 35 functionally connected to the bristle carrier 32 for driving the bristle carrier 32. The bristle carrier 32 may include a series of bristles 36 extending from the upper surface of the bristle carrier 32. In one embodiment, the bristle carrier 32 is supported for rotation about a rotation pin 31, and a drive pin 38 is connected between the bristle carrier 32 and brush shaft 35 for driving the bristle carrier to rotate in an oscillatory manner. A retention pin 40 may be inserted through the brush head 30 and into a slot in the bristle carrier 32 for retaining the bristle carrier 32 on the brush head 30. The handle 20 further includes a coupling stem 22 having a sidewall 21 extending in the direction of the longitudinal axis and terminating with a free end 24.

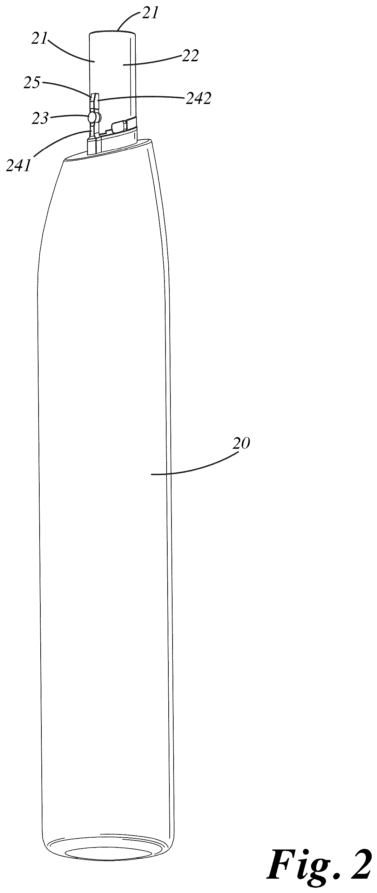

The sidewall 21 of the coupling stem 22 has a coupling pin 23 extending outwardly therefrom in a direction not parallel to the longitudinal axis. The coupling pin 23 may extend substantially perpendicular relative to the longitudinal axis. In one embodiment, the coupling stem 22 includes a coupling rib 25 extending from opposite sides of the pin 23 and longitudinally oriented in a direction generally parallel to the longitudinal axis. The rib 25 may have a first (lower in the figures) portion 241 and a second (upper) portion 242 opposite to the first portion 241. The rib 25 can be disposed adjacent to the pin 23. In the embodiment of FIGS. 1 and 2, the coupling pin 23 is disposed between the first portion 241 and the second portion 242 of the rib 25. The rib 25 and the coupling pin 23 may be constructed to outwardly protrude from the sidewall 21 to the same extent, i.e., an outmost outer surface of the rib 25 can be flush with an outmost outer surface of the coupling pin 23. Alternatively, the coupling pin 23 can protrude from the sidewall 21 to a greater extent than the rib 25 does, in which instance a portion of the coupling pin 23 extends beyond the outmost outer surface of the rib 25. In another embodiment, the pin 23 may have one of a variety of shapes, such as oval, diamond or prism, and the pin 23 may be positioned at an alternative location along the rib 25, such as at one of the ends of the rib 25, or the pin 23 may be a standalone pin 23 or positioned separate from the rib 25.

In one embodiment, the brush head 30 has a generally tubular outer sleeve 33 formed by a brush head sidewall 34. The outer sleeve 33 can have any suitable shape, including, e.g., a generally cylindrical shape, a generally conical shape, or any combination thereof. As used herein, the terms "generally cylindrical" and "generally conical" describe shapes strictly cylindrical and conical and those deviating from strictly cylindrical and conical shapes. Examples of such "generally cylindrical" and "generally conical" outer sleeve 33 include, without limitation, the outer sleeve 33 having a cross-sectional shape deviating from circular by being elongated in one direction, e.g., elliptical, oval, and the like. The outer sleeve can have other suitable shapes as well, e.g., polygonal, rectangular, and so on-or a combination of generally cylindrical/conical and polygonal shapes. Inside the outer sleeve 33, there is an interior space or cavity 29, defined by the sidewall 34 and structured and configured to receive the coupling stem 22 of the handle 20 when the brush head 30 is attached to the handle 20.

The coupling insert 100 includes structure for connecting the coupling insert 100 within the attachment end 43 of the outer sleeve 33, and also includes structure for connecting the brush head 30 to the handle 20. As shown, the coupling insert 100 is disposed inside the outer sleeve 33 of the brush head 30 and fit-pressed thereto, e.g., by utilizing a forward snap opening 37 and a rear snap opening 39 formed within the forward and rear surfaces of the outer sleeve 33. In one embodiment, the outer sleeve 33 includes a first end 41 supporting the bristle carrier 32 and the attachment end 43 opposite the first end 41. The snap openings 37, 39 may be positioned adjacent to the attachment end 43 of the outer sleeve 33, although they are not limited to any particular location within the outer sleeve 33.

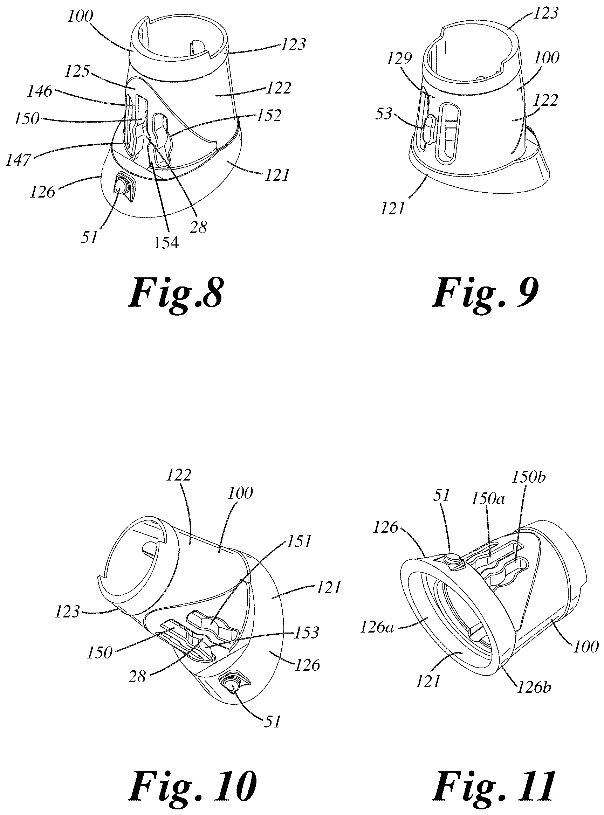

As is shown in FIGS. 8-14, the coupling insert 100 can have a lower section 121, an upper section 123, and a middle section 122 intermediate the lower section 121 and the upper section 123. The coupling insert 100 may further include a forward portion 125 and a rear portion 129 opposite the forward portion 125. The lower section 121 of the coupling insert 100 may comprise an annular flange 126 extending in a direction substantially perpendicular to the longitudinal axis A and comprising an inner perimeter 126a and an outer perimeter 126b defining a thickness therebetween that is generally greater than the thickness of the insert 100. When the brush head 30, having the coupling insert 100 incorporated therein, is securely attached to the handle 20, the annular flange 126 can be positioned adjacent to the handle 20. The attachment end 43 of the outer sleeve 33 with the coupling insert 100 attached forms an attachment portion for the handle 20. Alternatively, the coupling insert 100 may be formed integrally with the outer sleeve 33, for example, as a one-piece molded unit.

The structure for connecting the coupling insert 100 within the outer sleeve 33 may include snap protrusions extending from the coupling insert 100. As shown, a forward snap protrusion 51 may extend from the forward portion 125 of the insert 100 within the lower section 121, and in one embodiment, the forward snap protrusion 51 extends outwardly from the outer perimeter 126b of the annular flange 126. The forward snap protrusion 51 may be positioned on the coupling insert 100 generally at any location such that it aligns with and fits into the forward snap opening 37 on the outer sleeve 33 when the insert 100 is disposed in the outer sleeve 33. Similarly, a rear snap protrusion 53 may extend from the rear portion 129 of the insert 100. The rear snap protrusion 53 may be positioned at generally any location on the insert 100 such that it aligns with the rear snap opening 39 on the outer sleeve 33 when the insert 100 is disposed in the outer sleeve 33. In the illustrated embodiment, the rear snap protrusion is positioned in the middle section 122 of the insert 100 within the rear portion 129. The forward 51 and rear 53 snap protrusions, or alternative attachment structure between the outer sleeve 33 and the insert 100 such as ribs, a ball and socket connection, or another connection structure, may therefore combine to retain the insert 100 within the attachment end 43 of the outer sleeve 33 via the fitment of the snap protrusions 51, 53 within the snap openings 37, 39. In one embodiment, the annular flange 126 may act to engage a portion of the outer sleeve 33 within the attachment end 43 to prevent over insertion of the insert 100 into the outer sleeve 33.

In one embodiment, the structure for connecting the coupling insert 100 to the handle 20 may be positioned in the middle section 122 of the coupling insert 100, although other arrangements and positions may be used. With reference to Figs. 8-14, the coupling insert 100 may include a pair of retention bars 150, a central channel 28, and a pair of flex channels 152. The pair of retention bars includes a first retention bar 150a and a second retention bar 150b. The retention bars 150 each include an upper end 146 connected to the upper section 123 of the insert 100 and an opposite lower end 147 connected to the lower section 121 of the insert 100 such that the retention bars 150 are each supported at multiple locations or along multiple surfaces, in this case both ends 146, 147, and not cantilevered. As a result of their support at multiple locations, the bars 150 are robust and resilient, as they do not include a free, unsupported end that may be prone to bending or breaking of one or both of the bars 150, but do include resilient portions or sections in between the support locations that are capable of flexing upon contact from a portion of the handle, and returning to their original shape when the portion of the handle is disengaged. In the illustrated embodiment, he retention bars 150a and 150b extend generally parallel to the longitudinal axis A, and may be spaced apart from one another to form the central channel 28 therebetween. The flex channels 152 are formed on opposing sides of the retention bars 150 and extend generally parallel to the retention bars 150 and the central channel 28 to create a space that enables resilient flexing of the retention bars 150. The retention bars 150 each have outer surfaces 151 facing into the flex channels 152, and interior coupling surfaces 153 facing into the central channel 28. In one embodiment, each retention bar 150 has a thickness that is the same or similar to the thickness of the insert 100, although the thickness and width of the retention bars 150 may be adjusted by the manufacturer to provide the retention bars 150 with a desired level of flexibility and resilience.

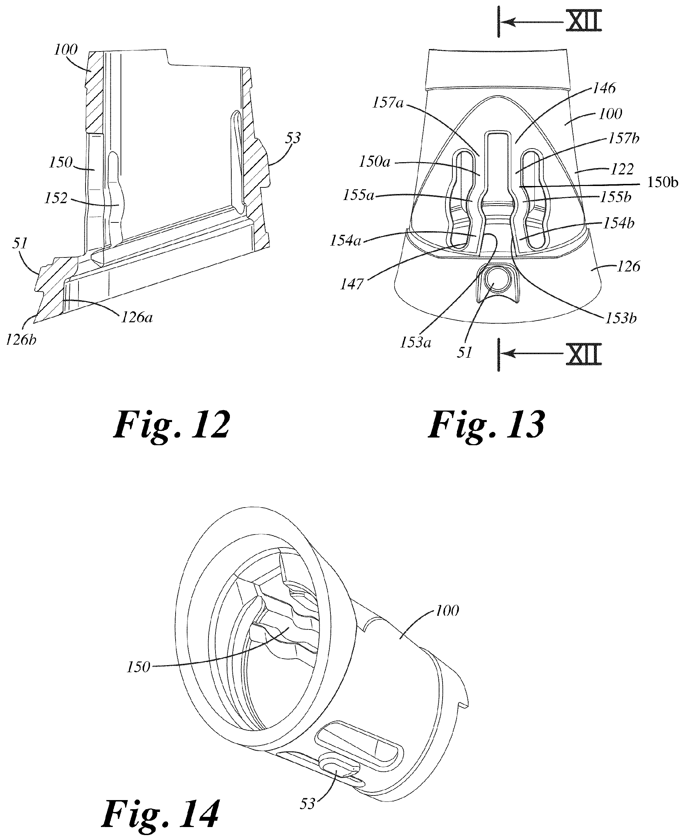

The retention bars 150 are constructed and arranged to form the central channel 28 in a manner that is configured to receive and engage the rib 25 and coupling pin 23 on the handle 20, to restrict a movement (axial and/or radial) of the brush head 30 relative to the handle 20 when the brush head 30 is axially attached to the handle 20. In one embodiment, with reference to Fig. 13, the retention bars 150a, 150b, each include a guide portion 154, a clamp portion 155, and an upper portion 157. The upper portions 157a, 157b extend between the upper ends 146 and the clamp portions 155, and may be generally straight and parallel with one another such that the central channel 28 within the upper portion 157 is sized and shaped to match the size and shape of the second portion 242 of the rib 25. The spacing of the retention bars 150 in the upper portion 157 may be approximately the same as the width of the second portion 242 of the rib 25 such that when the second portion 242 of the rib 25 is positioned between the upper portions 157a, 157b of the retention bars 150 the rib 25 is radially retained.

Each of the first and second retention bars 150 includes a corresponding coupling surface 153a, 153b, which includes the guide portion 154 (154a, 154a) the clamp portion 155 (155a, 155b) adjacent to the guide portion 154 and the upper portion (157a, 157b). More particularly, the guide portions 154a and 154b extend from the lower ends 147 of the retention bars 150 to the clamp portion 155, and may be angled with respect to each other such that they converge toward each other from the lower ends 147 of the retention bars 150 toward the clamp portion 155 in order to guide the rib 25 into the channel 28 during insertion of the handle 20 into the sleeve 33 and insert 100. In one embodiment, the distance between the first guide portion 154a and the second guide portion 154b of the first and second coupling surfaces 153a, 153b, respectively, can range from about 0.4 mm to about 5 mm, from about 0.5 mm to about 4.5 mm, and from about 0.6 mm to about 3 mm.

The clamp portion 155 of the retention bars 150 is positioned between the upper portions 157 and the guide portions 154. As a result of being supported at opposite ends, the retention bars 150 have a degree of flexibility with respect to one another in the clamp portion 155. In embodiments such as the illustrated embodiment in which the coupling pin 23 is generally cylindrical, the diameter of the pin 23 (or an equivalent dimension orthogonal to the slide portions if the pin is not cylindrical) can be from about 0.8 mm to about 6 mm, from about 1 mm to about 5 mm, and from about 2 mm to about 4 mm. The size and shape of the mutually opposite clamp portions 155a, 155b of the coupling surfaces 153a, 153b, respectively, can be structured to match, in shape and size, the outer surface of the coupling pin 23 such that the pin 23 can snap fit between the clamp portions 155a, 155b upon insertion of the pin 23 beyond the guide portion 154 and into the clamp portion 155. For example, in the illustrated embodiment, the clamp portions 155a and 155b each have a concave surface facing one another to match the cylindrical shape of the pin 23 on opposing sides of the pin 23. The coupling surfaces 153 are structured and configured to slidably-and resiliently by virtue of the flexibility and resiliency of the retention bars 150-engage the coupling pin 23 when the brush head 30 is being axially attached to the handle 20, i.e., when the brush head 30 is being axially moved relative to the handle 20 and the coupling stem 22 having the coupling pin 23 arranged thereon. During the axial attachment, the coupling pin 23 contacts and is guided by the mutually opposite guide portions 154 of the coupling surfaces 153 at the pin's opposite sides as the pin 23 slides upwardly, at some point engaging in a resilient contact with the converging guide portions 154. When the pin 23 reaches the clamp portion 155, the transition in the shape of the retention bars 150 from the guide portion 154 to the clamp portion 155 causes the pin 23 to snap fit with the clamp portions 155a, 155b. In the illustrated embodiment, when the pin 23 is snap fitted within the clamp portions 155a, 155b, the upper portion 242 of the rib 25 is positioned and axially retained between the upper portions 157a, 157b, and the lower portion 241 of the rib 25 is positioned within the guide portions 154a, 154b.

When the brush head 30 is being attached to the handle, a space or clearance existing between the two mutually opposite coupling surfaces 153 of the retention bars 150 resiliently expands-as the coupling pin 23 slides along the converging opposite guide portions 154 of the coupling surfaces 153. When this happens, the elastic (or resilient) deformation or movement of the retention bars 150 may include a bending elastic deformation, i.e., a resilient movement of the retention bars 150 away from one another to take up some of the space formed by the flex channels 152; a torsion-twisting elastic deformation, i.e., a resilient torque movement of at least a portion of the retention bars 150 wherein a portion of each retention bar 150 and the corresponding coupling surface 153 rotates relative to the arm's opposing fixed ends 146, 147; and any combination thereof.

As noted, the pin 23 on the handle 20 may have any suitable shape, e.g., cylindrical, prismatic, conical, and others, although the cylindrical or conical shape may be preferred. Correspondingly, the clamp portions 155 of the coupling surfaces 153 can also be profiled to match the shape of the pin 23, such as to have a circular or semi-circular shape, wherein a diameter of the pin 23 is substantially equal to an equivalent diameter of the clamp portions 155. In such an arrangement, the entire facing concave surfaces of the clamp portions 155 may be in contact with the side surface of the coupling pin 23, as is described above.

In another embodiment of the current invention, other configurations of one or more resilient retention bars may be used to retain the brush head 30 on the handle 20. For example, a single one of the retention bars 150 may be used, with the retention bar 150 positioned along or adjacent to the axis of travel of the pin 23 or other attachment portion of the handle 20, and with the clamp portion 155 of the retention bar 150 shaped to correspond to the shape of the pin 23 and receive a portion of the pin 23 as the attachment portion of the handle 20 is inserted into the brush head 30. The single retention bar 150 may be shaped similar to the above described retention bars 150a, 150b, with guide portion 154, clamp portion 155 and upper portion 157. Alternatively, the single retention bar 150 may have a different shape, including a generally flat shape that may flex and form a friction fit with the handle, or a generally flat shape with a notch or other structure to receive and retain a portion of the handle. A single retention bar may also be disposed generally perpendicular to the longitudinal axis A, the retention bar including a notch, such as a U-shaped notch, within a portion of the retention bar that aligns with an attachment portion of the handle to receive and retain the portion of the handle. And in another embodiment including multiple retention bars, one of the retention bars may be substantially flat, while the other includes a concavity, notch or other structure shaped to receive an attachment portion of the handle 20 with the opposite retention bar positioned to engage the attachment portion of the handle 20 and bias the attachment portion into the retention bar concavity. Additionally, the retention bars may both have generally flat or slightly curved interior surfaces for receiving an attachment portion of the handle 20, such as a pin 23, therebetween, wherein the retention bars are spaced apart such that they engage or flex upon insertion of the pin 23 to retain the pin 23. The retention bars may be substantially parallel to one another, or may extend at an angle with respect to one another ,such as a converging wedge shape to capture the pin 23 as the pin 23 is inserted. In each embodiment of the retention bars, the retention bars are robust via their support or attachment to the brush head 30 at multiple locations such as their opposing ends.

The drive mechanism of the handle 20 can be structured and configured for a linear oscillatory movement substantially along the longitudinal axis, while the bristle carrier 32 can be structured and configured for a rotational oscillatory motion around a rotation axis extending substantially perpendicular to the longitudinal axis, a lateral oscillatory motion around an axis extending substantially parallel to the longitudinal axis, or any other type of movement, including a linear oscillatory movement, or vibratory action, and other movement patterns, as is known in the art.

Assembly of the brush head 30 with the handle 20 generally includes the steps of: (a) inserting the coupling insert 100 into the outer sleeve 33 of the brush head 30 through the attachment end 43 and snap fitting the coupling insert 100 into the outer sleeve 33 by interfitting the snap protrusions 51, 53 within the snap openings 37, 39 (this step may be completed by the manufacturer); (b) aligning the brush head 30 above the handle 20 with the attachment end 43 of the brush head 30 aligned along the longitudinal axis A above the attachment stem 22 of the handle 20; (c) radially aligning the rib 25 on the attachment stem 22 with the central channel 28 of the coupling insert 100; (d) inserting the attachment stem 22 into the coupling insert 100 and the outer sleeve 33 with the upper portion 242 of the rib 25 extending into the guide portion 154 of the channel 28; (e) continuing to insert the attachment stem 22 into the coupling insert 100 until the coupling pin 23 travels past the guide portion 154, flexes the retention bars 150, and snap fits into the clamp portion 155 of the channel 28 with the upper portion 242 of the rib 25 extending into the upper portion 157 of the channel 28. The brush head 30 may be removed by pulling the brush head 30 and handle 20 apart along the longitudinal axis until the retention force of the clamp portions 155 is overcome and the brush head 20 pulls off the attachment stem 22.

The above description is that of current embodiments of the invention. Various alterations and changes can be made without departing from the spirit and broader aspects of the invention as defined in the appended claims, which are to be interpreted in accordance with the principles of patent law including the doctrine of equivalents. This disclosure is presented for illustrative purposes and should not be interpreted as an exhaustive description of all embodiments of the invention or to limit the scope of the claims to the specific elements illustrated or described in connection with these embodiments. For example, and without limitation, any individual element(s) of the described invention may be replaced by alternative elements that provide substantially similar functionality or otherwise provide adequate operation. This includes, for example, presently known alternative elements, such as those that might be currently known to one skilled in the art, and alternative elements that may be developed in the future, such as those that one skilled in the art might, upon development, recognize as an alternative. Further, the disclosed embodiments include a plurality of features that are described in concert and that might cooperatively provide a collection of benefits. The present invention is not limited to only those embodiments that include all of these features or that provide all of the stated benefits, except to the extent otherwise expressly set forth in the issued claims. Any reference to claim elements in the singular, for example, using the articles "a," "an," "the" or "said," is not to be construed as limiting the element to the singular.

The present disclosure extends to the following numbered statements.

S1. A replacement brush head for attachment to an electric toothbrush handle, the handle having an attachment stem with a sidewall, and a pin extending outwardly from the sidewall, the replacement brush head comprising:
an outer sleeve with a first end and a second end opposite the first end, the outer sleeve defining a longitudinal axis;
a bristle carrier disposed on the first end of the outer sleeve, the bristle carrier having a bristle surface, the bristle surface supporting a plurality of bristles extending outwardly from the bristle surface, the bristle carrier configured to rotate with respect to the outer sleeve about a cleaning axis extending at an angle to the longitudinal axis; and
a coupling insert disposed within the second end of the outer sleeve, the coupling insert including an upper end and a lower end, the coupling insert including a pair of spaced apart, resilient retention bars, each of the retention bars including first and second ends connected to the coupling insert and a clamp portion positioned between the first and second ends and capable of flexing with respect to the first and second ends, the retention bars spaced apart from one another such that they engage and receive the pin upon insertion of the attachment stem of the handle into the coupling insert with the pin radially aligned between the retention bars.
S2. The replacement brush head of statement S1, wherein the coupling insert includes an upper section adjacent the upper end, a lower section adjacent the lower end, the retention bars extending between the upper and lower sections.
S3. The replacement brush head of statement S1 (or any of the preceding statements), wherein the each of the retention bars include an upper portion, the clamp portion, and a guide portion, the upper portion extending from the first end of the retention bar to the clamp portion, the guide portion extending from the second end of the retention bar to the clamp portion.
S4. The replacement brush head of statement S3 (or any of the preceding statements), wherein the clamp portions of the retention bars are shaped to match the shape of the coupling pin.
S5. The replacement head of statement S4, wherein the guide portions of the retention bars converge toward one another from the second ends of the retention bars to the clamp portion, such that the guide portions of the retention bars can act to guide the coupling pin into the clamp portion as the replacement head is attached to the electric toothbrush handle.
S6. The replacement head of statement S5 (or any of the preceding statements), wherein the upper portions of the retention bars are generally parallel to one another.
S7. The replacement head of statement S6 (or any of the preceding statements), wherein the clamp portions are concave sections facing one another.
S8. The replacement head of statement S7 (or any of the preceding statements), wherein the clamp portions each include an upper end adjoining the upper portion and lower end adjoining the guide portion, and wherein a portion of the clamp portions are spaced apart from each other a first distance, and wherein the lower ends of the clamp portions are spaced apart from each other a second distance, the first distance greater than the second distance such that the coupling pin snap fits into the clamp portion.
S9. The replacement head of statement S8 (or any of the preceding statements), wherein the retention bars include interior coupling surfaces facing each other and exterior surfaces opposite the interior surfaces, the coupling insert defining first and second flex channels, the flex channels extending along the exterior surfaces.
S10. The replacement head of statement S9 (or any of the preceding statements), including structure for connecting the coupling insert to the outer sleeve and retaining the coupling insert within the outer sleeve.
S11. The replacement head of statement S10 (or any of the preceding statements), wherein the structure for connecting the coupling insert includes a pair of protrusions extending from the coupling insert, the protrusions aligning with and extending into openings in the outer sleeve upon insertion of the insert into the outer sleeve.
S12. An attachment portion of a replacement brush head comprising:
   a tubular body having a first end and a second end opposite the first end, the tubular body defining a longitudinal axis extending through the first and second ends;
   a bristle carrier movably mounted to the first end of the tubular body for rotation about a carrier axis extending at an angle with respect to the longitudinal axis;
   wherein the second end of the tubular body is configured for attachment to an electric toothbrush handle, the second end of the tubular body including a pair of spaced apart, resilient retention bars, each of the resilient retention bars including first and second ends and a clamping portion between the first and second ends, the first and second ends directly connected to the tubular body, the clamping portion capable of flexing with respect to the first and second ends.
S13. The attachment portion of statement S 12, wherein the retention bars are spaced apart from one another a distance corresponding to a width of a coupling pin to be inserted between the retention bars and retained by the retention bars.
S14. The attachment portion of statement S13 (or any of statements S12 and S13), wherein each of the retention bars includes an upper portion, the clamp portion, and a guide portion, the upper portion extending from the first end of the retention bar to the clamp portion, the guide portion extending from the second end of the retention bar to the claim portion (clamp portion), the retention bars each including an interior coupling surface extending through each of the upper portion, the clamp portion and the guide portion, wherein the contour of the interior coupling surface changes from the upper portion to the clamp portion and from the clamp portion to the guide portion.
S15. The attachment portion of statement S14 (or any of statements S12 to S14), wherein the clamp portions are concave sections facing one another.
S16. The attachment portion of statement S15 (or any of statements S12 to S15), wherein the guide portions of the retention bars are spaced apart and converge toward one another from the second ends of the retention bars to the clamp portion, such that the guide portions of the retention bars can act as a guide to guide a coupling pin into the clamp portion as the replacement brush head is attached to an electric toothbrush handle.
S17. The attachment portion of statement S 16 (or any of statements S12 to S16), wherein the retention bars include exterior surfaces opposite the interior surfaces, the coupling insert defining first and second flex channels, the flex channels extending along the exterior surfaces.
S18. The attachment portion of statement S 17 (or any of statements S12 to S17), wherein the tubular body includes an outer sleeve and a coupling insert disposed within the outer sleeve, the retention bars formed in the coupling insert.
S19. The attachment portion of statement S18 (or any of statements S12 to S18), including structure for connecting the coupling insert to the outer sleeve, the structure including a pair of protrusions extending from the coupling insert, the protrusions aligning with and extending into openings in the outer sleeve upon insertion of the insert into the outer sleeve.
S20. A system for attaching a replacement brush head to the handle portion of an electric toothbrush comprising:
   an attachment stem extending from the handle, the attachment stem including a sidewall, a rib extending outwardly from the sidewall, an intermediate portion of the rib having a cylindrical shape and forming a coupling pin;
   an outer sleeve having a tubular body with a first end and a second end opposite the first end, the tubular body defining a longitudinal axis;
   a bristle carrier movably mounted on the first end of the outer sleeve, the bristle carrier having a bristle surface, the bristle surface supporting a plurality of bristles extending outwardly from the bristle surface, the bristle carrier configured to rotate with respect to the outer sleeve about a cleaning axis extending at an angle to the longitudinal axis; and
   a coupling insert disposed within the second end of the tubular body of the outer sleeve, the coupling insert having an upper end positioned within the tubular body, and a lower end positioned adjacent to the second end of the tubular body, the coupling insert including a pair of spaced apart, resilient retention bars extending parallel to the longitudinal axis, each of the resilient retention bars including first and second ends connected to the coupling insert, each of the resilient retention bars including a clamp portion positioned between the first and second ends and capable of flexing with respect to the first and second ends, the clamp portions of the retention bars each having an inwardly facing concave surface and spaced apart from one another such that they engage and receive the coupling pin upon insertion of the attachment stem into the coupling insert with the pin radially aligned between the retention bars.
   S21. A replacement brush head for attachment to an electric toothbrush handle comprising:
   an outer sleeve with a first end and a second end opposite the first end, the outer sleeve defining a longitudinal axis;
   a bristle carrier disposed on the first end of the outer sleeve, the bristle carrier having a bristle surface, the bristle surface supporting a plurality of bristles extending outwardly from the bristle surface, the bristle carrier configured to rotate with respect to the outer sleeve about a cleaning axis extending at an angle to the longitudinal axis; and
   a coupling insert disposed within the second end of the outer sleeve, the coupling insert including at least one resilient retention bar, the at least one retention bar including a first portion connected to the coupling insert, a second portion connected to the coupling insert, and a clamp portion positioned between the first and second portions and capable of flexing with respect to the first and second portions, the retention bar positioned to engage and receive a portion of the handle upon insertion of the portion of the handle into the coupling insert.
S22. The replacement brush head of statement S21, wherein the at least one resilient retention bar includes a pair of retention bars spaced apart and defining a channel therebetween.
S23. The replacement brush head of statement S22 (or any of statements S21 and S22), wherein the clamp portion of at least one of the retention bars is shaped to correspond to an exterior shape of a portion of the handle.
S24. The replacement brush head of statement S23 (or any of statements S22 to S23), wherein the clamp portion of the at least one of the retention bars is concave.
S25. The replacement brush head of statement S24 (or any of statements S21 to S24), wherein the clamp portions of both of the retention bars are mutually opposing concave shapes.

## Claims

1. A replacement brush head for attachment to an electric toothbrush handle comprising:
an outer sleeve with a first end and a second end opposite the first end, the outer sleeve defining a longitudinal axis;
a bristle carrier disposed on the first end of the outer sleeve, the bristle carrier having a bristle surface, the bristle surface supporting a plurality of bristles extending outwardly from the bristle surface, the bristle carrier configured to rotate with respect to the outer sleeve about a cleaning axis extending at an angle to the longitudinal axis; and
a coupling insert disposed within the second end of the outer sleeve, the coupling insert including at least one resilient retention bar, the at least one retention bar including a first portion connected to the coupling insert, a second portion connected to the coupling insert, and a clamp portion positioned between the first and second portions and capable of flexing with respect to the first and second portions, the retention bar positioned to engage and receive a portion of the handle upon insertion of the portion of the handle into the coupling insert.

2. The replacement brush head of claim 1, wherein the at least one resilient retention bar includes a pair of retention bars spaced apart and defining a channel therebetween.

3. The replacement brush head of claim 1 or 2, wherein the clamp portion of at least one of the retention bars is shaped to correspond to an exterior shape of the portion of the handle.

4. The replacement brush head of any of the preceding claims, wherein the clamp portion of the at least one of the retention bars is concave.

5. The replacement brush head of any of the preceding claims, wherein the clamp portions of both of the retention bars are mutually opposing concave shapes.

6. The replacement brush head of any of the preceding claims, wherein the coupling insert includes an upper end adjacent the first portion, and a lower end adjacent the second portion.

7. The replacement brush head of any of the preceding claims, wherein the each of the retention bars include an upper portion, the clamp portion, and a guide portion, the upper portion extending from the first portion of the retention bar to the clamp portion, the guide portion extending from the second portion of the retention bar to the clamp portion.

8. The replacement head of claim 7, wherein the guide portions of the retention bars converge toward one another from the second portions of the retention bars to the clamp portion, such that the guide portions of the retention bars can act to guide the coupling pin into the clamp portion as the replacement head is attached to the electric toothbrush handle.

9. The replacement head of claim 7 or 8, wherein the upper portions of the retention bars are generally parallel to one another.

10. The replacement head of any of claims 7 to 9, wherein the clamp portions each include an upper end adjoining the upper portion and lower end adjoining the guide portion, and wherein a portion of the clamp portions are spaced apart from each other a first distance, and wherein the lower ends of the clamp portions are spaced apart from each other a second distance, the first distance greater than the second distance such that the coupling pin snap fits into the clamp portion.

11. The replacement head of any of the preceding claims, wherein the retention bars include interior coupling surfaces facing each other and exterior surfaces opposite the interior surfaces, the coupling insert defining first and second flex channels, the flex channels extending along the exterior surfaces.

12. The replacement head of any of the preceding claims, including structure for connecting the coupling insert to the outer sleeve and retaining the coupling insert within the outer sleeve.

13. The replacement head of claim 12, wherein the structure for connecting the coupling insert includes a pair of protrusions extending from the coupling insert, the protrusions aligning with and extending into openings in the outer sleeve upon insertion of the insert into the outer sleeve.

14. The replacement head of any of the preceding claims, connected to an attachment stem extending from the handle, the attachment stem including a sidewall, a rib extending outwardly from the sidewall, an intermediate portion of the rib having a cylindrical shape and forming the portion of the handle engaged with the retention bars in the manner of a coupling pin.
